# EUROPÄISCHE PATENTSCHRIFT

(11) **EP 2 917 626 B1**
(45) Veröffentlichungstag und Bekanntmachung des Hinweises auf die Patenterteilung: **14.12.2016**
(21) Anmeldenummer: 14761272.5
(22) Anmeldetag: 04.07.2014
(51) Int. Cl.: F16L 23/032, F16L 23/16, F16L 55/115

(54) **FLANSCHVERBINDUNG**
FLANGED JOINT
RACCORD À BRIDES

(30) Priorität: 04.07.2013 DE 102013107044
(43) Veröffentlichungstag der Anmeldung: 16.09.2015
(73) Patentinhaber: Rosenau, Heinz, 34225 Baunatal (DE)
(72) Erfinder: Rosenau, Heinz, 34225 Baunatal (DE)
(74) Vertreter: Sprenger, Gerrit Lars Eike
(86) Internationale Anmeldenummer: PCT/DE2014/100230
(87) Internationale Veröffentlichungsnummer: WO 2015/000469

(56) Entgegenhaltungen:
- WO-A1-01/75348
- US-A- 3 656 769
- US-A1- 2007 102 926

## Beschreibung

Die Erfindung betrifft eine Flanschverbindung nach dem Oberbegriff des Patentanspruchs 1.

Derartige Flanschverbindungen sind beispielsweise aus der US 3 656 769 A und der WO 01/75348A1 bekannt. Diese Dokumente offenbaren jeweils eine Flanschverbindung für wenigstens zwei Bauteile, welche einander zugewandte Anlagenflächen aufweisen, wobei das eine Bauteil an dem anderen Bauteil mit Befestigungselementen befestigbar ist, wobei zwischen den Bauteilen in deren Randbereich ein Vorsprung angeordnet ist, wobei eine der Anlagenflächen gegenüber der andern Anlagefläche konvex gebogen ist und die Anlageflächen in einem Verbindungsbereich unter einer Flächenpressung parallel zueinander angeordnet sind.

Eine weitere Flanschverbindung ist beispielsweise in der
DE 199 14 668 A1 beschrieben. Bei dem dortigen Flanschrohr ist zwischen den Anlageflächen der dort zu verbindenden Bauteile eine Ringdichtung beziehungsweise ein Dichtring angeordnet, der sich im Befestigungsfall an den Anlageflächen der verbundenen Bauteile abstützt. Um bei einem übermäßigen Anziehen der dort als Verbindungsmittel verwendeten Schrauben eine Beschädigung oder gar Zerstörung der Ringdichtung beziehungsweise des Dichtringes zu vermeiden, sind dort Vorsprünge zwischen den zu verbindenden Bauteilen im Randbereich der Anlageflächen angeordnet. Da auch die dortigen zum Verbinden der Bauteile verwendeten Schrauben im Randbereich angeordnet sind, ist es nicht möglich die Schrauben weiter anzuziehen, sobald die Anlagefläche des einen Bauteils auf den Vorsprüngen aufgesetzt haben, was ein konvexes Durchbiegen der Anlagefläche des einen Bauteils in Richtung der Anlagefläche des anderen Bauteils zur Folge hätte. In diesem Zustand sind die Anlageflächen der zu verbindenden Bauteile in einem definierten Abstand im Wesentlichen parallel zueinander angeordnet, wobei der Dichtring beziehungsweise die Ringdichtung zwischen diesen Anlageflächen unter der für den Dichtring beziehungsweise die Ringdichtung optimalen Spannung eingespannt ist. Dieses optimale Einspannen ist somit ohne ein aufwendiges genau definiertes Festziehen der Befestigungsschrauben unter Zuhilfenahme beispielsweise eines Drehmomentschlüssels ermöglicht, wobei durch den definierten Abstand der Anlageflächen der Bauteile eine für den Dichtring beziehungsweise die Ringdichtung vordefinierte elastische Verformung sichergestellt ist, ohne dass es zu einer Quetschung beziehungsweise Zerstörung desselben kommt.

Grundsätzlich ist bei Verbindungen, insbesondere bei mehr oder weniger punktförmigen Verbindungen wie bei Schraubverbindungen, Nagelverbindungen, Nietverbindungen oder dergleichen aber die dort entstehende Flächenpressung durch eine kegelstumpfförmige Druckverteilung nach Rötscher in einem kleinen begrenzten Umfangsbereich des Befestigungselementes realisiert. Der Umfangsflächenbereich ist dabei abhängig von der Materialstärke - Flanschdicke, Bauteildicke und deren konstruktive Form - der zu verbindenden Bauteile, so dass auch bei der Flanschverbindung gemäß der DE 199 14 668 A1 im Bereich der Dichtung kein konstanter Druck über den gesamten Umlauf des Dichtrings beziehungsweise der Ringdichtung gegeben ist. In der Folge können daher auch bei dieser Flanschverbindung aufgrund der unterschiedlichen Druckverteilung über den Umlauf des Dichtrings beziehungsweise der Ringdichtung Undichtigkeiten auftreten.

Es ist Aufgabe der Erfindung, eine Flanschverbindung zur Verfügung zu stellen, bei der die Dichtigkeit bestmöglich gewährleistet ist.

Gelöst wird diese Aufgabe durch eine Flanschverbindung mit allen Merkmalen des Patentanspruchs 1. Vorteilhafte Ausgestaltungen der Erfindung finden sich in den Unteransprüchen.

Durch die Erfindung ist eine Flanschverbindung für zwei Bauteile verwirklicht, welche einander zugewandte Anlageflächen aufweisen, wobei das eine Bauteile an dem anderen Bauteil mit wenigstens einem Befestigungselement befestigbar ist und wobei zwischen den Bauteilen an deren Randbereich wenigstens ein Vorsprung angeordnet ist, wenigstens eine der Anlagenflächen gegenüber der andern Anlagefläche konvex gebogen ist und die Anlageflächen in einem Verbindungsbereich unter einer Flächenpressung zueinander angeordnet sind. Dabei kann unter einer Flächenpressung zum einen ein flächigen Aneinanderliegen von ebenen Anlageflächen der zu verbindenden Bauteile verstanden werden, wobei zwischen den Anlageflächen im Verbindungsbereich auch weitere Dichtelemente sowohl teil- oder vollflächig angeordnet sein können, die aber nicht zwingend notwendig, da auch ohne solche Dichtelemente bereits die Verbindungsbereich abdichtend ausgebildet sein kann. Zum anderen kann darunter aber auch ein Anliegen einer abgerundeten Anlagefläche eines Bauteils auf einer Anlagefläche des anderen Bauteils verstanden werden, wobei im Verbindungsbereich die Anlageflächen im Wesentlichen wieder parallel zueinander angeordnet sind, wobei auch hier zwischen den Anlageflächen im Verbindungsbereich auch weitere Dichtelemente angeordnet sein können.

Da wenigstens eines der Bauteile beim Verbinden im Randbereich eine Biegung erfährt, ist es vorgesehen, dass der wenigstens eine Vorsprung eine Auflagefläche aufweist, die gegenüber den Anlageflächen der Bauteile, wenn diese in ihrem unverbundenen Zustand parallel zueinander angeordneten sind, um einen Winkel verschwenkt ist. Dieser Winkel entspricht dabei genau dem Winkel, mit dem eine der Anlageflächen der Bauteile gegenüber den anderen Anlageflächen der Bauteile in deren verbundenen Zustand im Randbereich verschwenkt ist. Dabei ist im Verbindungsbereich der Anlageflächen der verbundenen Bauteile eine vollflächige Kontaktierung der Anlageflächen realisiert ist. Hierdurch ist es ermöglicht, dass die Auflagefläche des Vorsprungs und die Anlagefläche des einen Bauteils vollflächig aufeinander zum Liegen kommen, so dass insbesondere bei einem umlaufenden Vorsprung signifikant verbessert ist. Sofern dabei zwischen der Anlagefläche der des einen Bauteils und der Auflagefläche des Vorsprungs angeordneten Dichtmittels die Dichtigkeit der erfindungsgemäßen Vorrichtung Insofern ist hinsichtlich der Dichtigkeit bei dieser Ausgestaltung der Erfindung eine gewisse Redundanz gegeben.

Mittels der Erfindung wird die kegelstumpfförmige Druckverteilung nach Rötscher im Verbindungsbereich nicht mehr auftreten, vielmehr ist dort durch die vollflächige Kontaktierung der Anlageflächen der verbundenen Bauteile eine nahezu konstante und gleichmäßige Druckverteilung über den gesamten Verbindungsbereich realisiert.

Durch die erfindungsgemäße Ausgestaltung ist es daher ermöglicht, eine Flanschverbindung herzustellen, deren Dichtigkeit nicht nur durch eine in ihren Dimensionen begrenzte Ringdichtung zu verwirklichen, bei der aufgrund der geringen Dimensionen des Dichtrings bereits eine geringe Beschädigung desselben ausreicht, dass die notwendige Dichtigkeit der Flanschverbindung nicht mehr gewährleistet ist. Vielmehr ist es durch die Erfindung nun mehr ermöglicht, mittels einer Flanschverbindung großflächigere Dichtbereiche herzustellen, bei denen im Wesentlichen über den gesamten Verbindungsbereich der Anlageflächen der zu verbindenden Bauteile eine im Wesentlichen gleichförmige und konstante Flächenpressung vorliegt. Die Abdichtung der Flanschverbindung erfolgt somit über den gesamten Verbindungsbereich der Anlageflächen unter im Wesentlichen konstanter Flächenpressung, so dass auch geringe Beschädigungen der Anlageflächen der Bauteile keinen wesentlichen Einfluss auf die Dichtigkeit der Flanschverbindung haben. Zusätzlich wird bei einer rauen Oberflächenbeschaffenheit der Anlageflächen der Bauteile die Dichtigkeit durch Einbringen eines Dichtmittels verbessert, insbesondere wenn Mikroleckagen zwischen den Anlageflächen auftreten.
Die Erfindung kann zum einem zur Abdichtung zweier Bauteile eingesetzt werden. Zum anderen kann sie aber auch zum Fixieren von einem dritten Bauteil zwischen den beiden Bauteilen der Erfindung verwendet werden. Durch die gleichmäßige Anpresskraft wird dabei das dritte, fixierte Bauteil oberflächlich nicht beschädigt.

Gemäß einer ersten vorteilhaften Ausgestaltung der Erfindung ist durch den wenigstens einen Vorsprung im verbundenen Zustand der Bauteile ein direktes aneinander Liegen der Anlageflächen im Randbereich vermieden. Hierdurch wird erreicht, dass eines der zu verbindenden Bauteile in dem Randbereich eine Durchbiegungsspannung erfährt, durch welche eine besonders dichtende Verbindung der beiden Bauteile erreicht wird. Es ist allerdings auch möglich, dass der Vorsprung derart ausgebildet ist, das auch ein aneinander Liegen der Anlageflächen der beiden Bauteile in verbundenem Zustand erreicht wird. Auch hierdurch ist eine besonders dichtende Verbindung der beiden Bauteile erreicht.

Nach einer weiteren vorteilhaften Ausgestaltung der Erfindung ist es vorgesehen, dass der wenigstens eine Vorsprung an einem der zu verbindenden Bauteile angeformt ist. Eine solche Anformung ist im Wesentlichen derart zu verstehen, dass Vorsprung und eines der Bauteile einstückig ausgebildet sind. Dies kann zum einen durch eine Stauchung eines der Bauteile geschehen. Zum anderen kann aber ein solcher Vorsprung auch angegossen, angeschweißt oder durch eine andere dergleichen Verbindungstechnik einstückig angeformt sein. Hierdurch ist es ermöglicht, dass die zu verbindenden Bauteile bereits entsprechend vorkonfektioniert sind, so dass sie unmittelbar miteinander verbunden werden können, ohne dass zusätzliche Teile benötigt werden.

In einer anderen Ausgestaltung der Erfindung ist es allerdings auch vorgesehen, dass der wenigstens eine Vorsprung als separates Einlegeteil ausgebildet ist. Durch diese Ausgestaltung der Erfindung können mit handelsüblichen Bauteilen eine erfindungsgemäße Flanschverbindung realisiert werden. Ein solches Einlegeteil kann beispielsweise als eine Einstellschraube oder als eine Einlage aus Metall, Keramik, Kunststoff, Sintermaterialien, Kohlenstofffasern oder dergleichen Material beziehungsweise aus einer Kombination dieser Materialien ausgebildet sein.

Nach einer besonders vorteilhaften Ausgestaltung der Erfindung ist genau ein Vorsprung vorgesehen, der den Randbereich der zu verbindenden Bauteile vollständig umläuft und somit eine geschlossene Geometrie bildet. Diese Ausgestaltung der Erfindung hat sich insbesondere deshalb als besonders vorteilhaft herausgestellt, da der den Randbereich der zu verbindenden Bauteilte umlaufende Vorsprung dazu genutzt werden kann, dass zwischen dem Vorsprung und wenigstens einer der Anlageflächen der Bauteile eine weitere Dichtungsbarriere realisiert werden kann. Hierdurch ist es ermöglicht, die Dichtheit der Flanschverbindung auch dann zu gewährleisten, wenn der Verbindungsbereich der Anlageflächen gegebenenfalls doch einmal eine geringe Undichtigkeit aufweisen sollte. Die geschlossene Geometrie entspricht des Vorsprungs entspricht dabei im Wesentlichen der Geometrie des Randbereichs einer Öffnung eines der zu verbindenden Bauteile, welche durch die Flanschverbindung abgedichtet werden soll. Allerdings ist die Größe der der geschlossenen Geometrie des Vorsprungs deutlich Größer als die Geometrie des Randbereichs dieser Öffnung, damit die vollflächige Kontaktierung der Anlagenflächen der zu verbindenden Bauteile im Verbindungsfall gewährleistet ist. Im Wesentlichen wird es sich bei der umlaufenden Geometrie des Vorsprungs um eine kreisrunde Geometrie handeln, da eine erfindungsgemäße Flanschverbindung oftmals zum Abdichten von kreisrunden Rohren eingesetzt werden wird. Allerdings ist die Erfindung nicht darauf beschränkt. Es sind auch viele andere geschlossene Geometrien denkbar, wie beispielsweise Ovale, Ellipsen, Dreiecke, Vierecke, Quadrate oder höhergradige Mehrecke. Allerdings ist es bei Mehrecken sinnvoll die Eckbereiche der umlaufenden Geometrie des Vorsprungs abgerundet auszubilden, um eine ausreichende Kontaktierung des Vorsprungs mit den zu verbindenden Bauteilen zu gewährleisten. Insbesondere wenn der umlaufende Vorsprung noch einen redundanten Dichtbereich darstellen soll, ist es sinnvoll bei eckigen Geometrien mit abgerundeten Ecken zu arbeiten.

Um ein passgenaues exaktes aneinander Anliegen der zu verbindenden Bauteile zu ermöglichen, ist es nach einer anderen Ausgestaltung der Erfindung vorgesehen, dass der wenigstens eine Vorsprung in eine Vertiefung der Anlageflächen der Bauteile passgenau im Wesentlichen ohne Spiel eingreift, wobei die Dicke dieses Vorsprungs größer ist als die Tiefe der Vertiefung. Hierdurch ist es ermöglicht, die zu verbindenden Bauteile bereits vor dem Verbinden passgenau aufeinander zu setzen, so dass bereits vor dem Verbinden die exakte Position der Bauteile eingenommen ist. Hierdurch ist vermieden, dass im Verbindungsbereich der Anlageflächen beim Verbinden durch ein möglicherweise vorhandenes Spiel Beschädigungen auftreten, die die Dichtigkeit der erfindungsgemäßen Flanschverbindung negativ beeinträchtigen könnten.

Nach einem anderen Gedanken der Erfindung ist wenigstens im Verbindungsbereich zwischen den Bauteilen vollflächig ein Dichtungsmedium angeordnet. Dieses Dichtungsmedium kann separat auf die Anlageflächen im Verbindungsbereich aufgebracht werden, beispielsweise durch Aufsprühen oder Aufpinseln vor dem Verbinden der Bauteile, aber auch als separate Dichtung. Andererseits kann es aber auch bereits integraler Bestandteil einer Anlagefläche eines der zu verbindenden Bauteile sein.

Nach einem anderen Gedanken der Erfindung ist das wenigstens eine Befestigungselement als Schraube ausgebildet, die durch eine Öffnung eines der Bauteile hindurchführbar und mit ihrem Außengewinde in ein Innengewinde des anderen Bauteils eingreift und deren Schraubenkopf sich im verbunden Zustand der Bauteile an einer Anlagefläche des einen Bauteils abstützt. Hierdurch ist es möglich, die üblicherweise bei Flanschverbindung vorgesehene Schraubverbindung auch mit der erfindungsgemäßen Flanschverbindung zu verwenden. Aufgrund der Biegung des wenigstens einen Bauteils bei Verbinden der beiden Bauteile, ist dabei sogar eine Schraubensicherung in diese erfindungsgemäße Flanschverbindung integriert. Zusätzliche Schraubensicherungen wie beispielsweise Federringe sind daher nicht notwendig. In dieser Ausgestaltung der Erfindung ist es sogar möglich, dass sich der Randbereich, in dem die Anlageflächen der Bauteile in verbundenem Zustand nicht aneinander zum Liegen kommen, nur unter dem Schraubenkopf befindet, so dass auch kleindimensionierte Flanschverbindungen realisiert werden können. Der Schraubenanzug kann dabei mit einem vordefinierten Drehmoment oder Streckgrenzenanzug, was einem vordefinierten Drehmoment und zusätzlich einem weiteren vordefinierten Drehwinkel entspricht, erfolgen.

Andererseits kann es natürlich auch vorgesehen sein, dass das wenigstens eine Befestigungselement als hydraulischer oder pneumatischer Stempel, als Zwinge, als Schweißpunkt oder- naht, als Nagel, als Niete oder dergleichen Element für eine direkte und indirekte Befestigung ausgebildet ist.

Nach einem weiteren Gedanken der Erfindung ist das eine Bauteil als Rohr und das andere Bauteil als Abschlusselement zur Verschließung einer Öffnung des als Rohr ausgebildeten Bauteils ausgebildet. Hierdurch können in einfacher Art und Weise Rohre mit einer erfindungsgemäßen Flanschverbindung an ihrem offenen Ende mit einer gleichmäßigen Flächenpressung auf das Rohrende im Verbindungsbereich abgedichtet werden.

Ferner ist es natürlich auch möglich, dass beide Bauteile miteinander zu verbindenden Rohre ausgebildet sind, wobei hierbei dann die Dichtigkeit der Rohrverbindung durch die erfindungsgemäße Flanschverbindung gewährleistet ist.

Grundsätzlich hat es sich als sinnvoll erwiesen, dass das eine Bauteil und/oder das andere Bauteil aus einem Metall oder einem Kunststoff bestehen. Aus diesen Materialien werden viele zu verbindende Bauteile hergestellt, so dass die erfindungsgemäß Flanschverbindung in vielen Anwendungsbereichen zum Einsatz kommen kann.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: Ein erstes Ausführungsbeispiel einer erfindungsgemäßen Flanschverbindung, vor dem Herstellen der Dichtigkeit zwischen den zu verbindenden Bauteilen,
- Figur 2:: Das Ausführungsbeispiel der Figur 1, wobei hier die abdichtende Verbindung zwischen den Bauteilen bereits hergestellt ist,
- Figur 3:: Ein zweites Ausführungsbeispiel einer erfindungsgemäßen Flanschverbindung im abgedichteten Zustand der zu verbindenden Bauteile,
- Figur 4:: Ein drittes Ausführungsbeispiel einer erfindungsgemäßen Flanschverbindung im abgedichteten Zustand der zu verbindenden Bauteile,
- Figur 5:: Ein viertes Ausführungsbeispiel einer erfindungsgemäßen Flanschverbindung im abgedichteten Zustand der zu verbindenden Bauteile,
- Figur 6:: ein fünftes Ausführungsbeispiel einer erfindungsgemäßen Flanschverbindung,
- Figur 7:: ein sechstes Ausführungsbeispiel einer erfindungsgemäßen Flanschverbindung und
- Figur 8:: ein siebtes Ausführungsbeispiel einer erfindungsgemäßen Flanschverbindung.

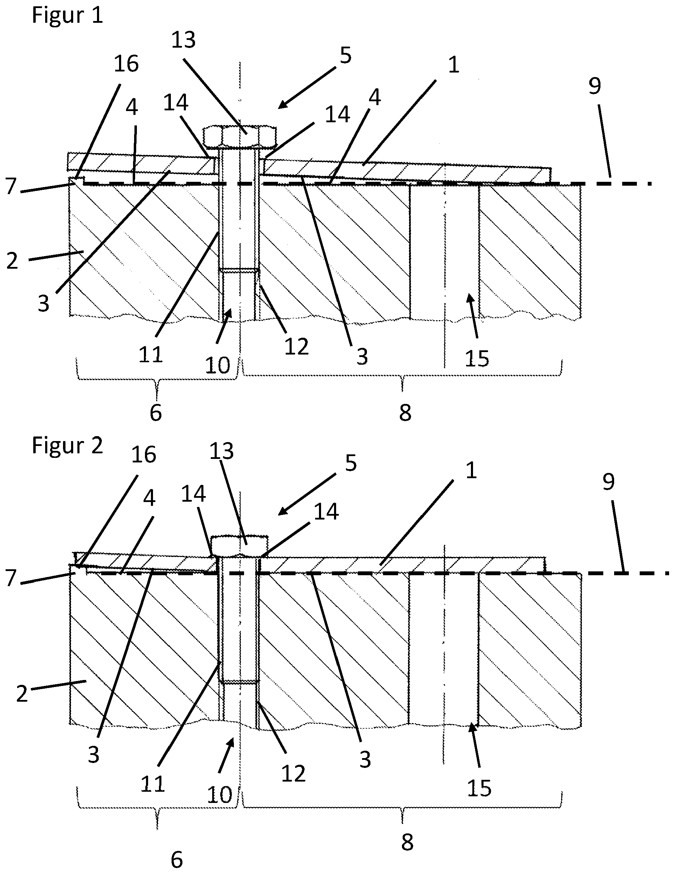

In der Figur 1 ist ein Ausführungsbeispiel einer erfindungsgemäßen Flanschverbindung zwischen einem ersten Bauteil 1 und einem 2 Bauteil 2 dargestellt, wobei mittels einer Schraube 5 die Verbindung realisiert wird. Die Schraube 5 wird dabei durch eine der Schraube 5 angepassten Öffnung in dem Bauteil 1 geführt und greift mit ihrem Außengewinde 11 in ein Innengewinde 10 des Bauteils 2 ein. Die Bauteile 1 und 2 weisen dabei einander zugewandte Anlageflächen 3 und 4 auf, welche sich im Wesentlichen in einem Verbindungsbereich 8 und in einen Randbereich 6 aufteilen lassen. In dem Ausführungsbeispiel der Figur 1 ist am dem Bauteil 2 im äußeren Bereich des Randbereiches 6 einen Vorsprung 7 vorgesehen, welcher eine Auflagefläche 16 aufweist, an dem der äußere Bereich der Anlagefläche 3 des Bauteils 1 in Verbindungsfall im Randbereich 6 zum Anliegen kommt. Die als Befestigungsmittel ausgebildete Schraube 5 weist zudem einen Schraubenkopf 13 auf, der sich im Befestigungsfall an Anlagenflächen 14 des Bauteils 1 abstützt.

Das Bauteil 1 bildet daher einen abdichtenden Deckel für die Öffnung 15 des Bauteils 2, in welcher ein hier nicht dargestelltes flüssiges oder gasförmiges Arbeitsmedium enthalten sein kann.

In der Figur 2 ist nunmehr das Ausführungsbeispiel der Figur 1 derart dargestellt, dass zwischen den Bauteilen 1 und 2 nunmehr die erfindungsgemäße Flanschverbindung abdichtend hergestellt ist. Wie hier deutlich zu erkennen ist, ist die Schraube 5 mittlerweile derart angezogen und mit ihrem Außengewinde 11 in das Innengewinde 12 der Öffnung 10 des Bauteils 2 eingeschraubt, dass das Bauteil 1 im Randbereich 6 auf der Auflagefläche 16 des Vorsprungs 7 des Bauteils 2 aufliegt.

Während das Bauteil 1 im Randbereich eine Biegung erfährt und seine Anlagefläche 3 dort nicht die Anlagefläche 4 des Bauteils 2 kontaktiert, ist im Verbindungsbereich 8 nunmehr eine vollflächige Kontaktierung des Anlagefläche 3 des Bauteils 1 und der Anlagefläche 4 des Bauteils 2 gegeben. Hierdurch ist nun im Verbindungsbereich 8 eine im Wesentlichen konstante Flächenpressung gegeben, so dass über den gesamten Verbindungsbereich 8 ein konstanter Druck beziehungsweise eine konstante Spannung zwischen den Bauteilen 1 und 2 beziehungsweise deren Anlageflächen 3 und 4 herrscht, wobei natürlich der Bereich der Öffnung 15 des Bauteils 2 davon ausgenommen ist. Der Verbindungsbereich 8 liegt nunmehr innerhalb einer Ebene 9, die in diesem Fall gleichbedeutend mit der Ebene der Anlagefläche 4 des Bauteils 2 in unverbundenen Zustand der Bauteile 1 und 2 ist. Zwischen den Anlageflächen 3 und 4 der Bauteile 1 und 2 ist zumindest im Verbindungsbereich 8 ein hier nicht dargestelltes Dichtmedium angeordnet, welches die Dichtigkeit der Flanschverbindung gewährleistet.

Wie aus der Figur 2 ersichtlich ist, stützt sich hierbei der Schraubenkopf 13 der Schraube 5 an Anlageflächen 14 des Bauteils 1 ab, während die Schraube 5 mit ihrem Außengewinde maximal in das Innengewinde 12 der Öffnung 10 des Bauteils 2 eingeschraubt ist.

Da es sich bei den Figuren 1 und 2 um eine Schnittdarstellung handelt, ist hier nicht ersichtlich, welche Geometrie die Öffnung 15 des Bauteils 2, welche abgeschlossen werden soll, im Querschnitt hat. Es ist denkbar, dass es sich hierbei um eine im Querschnitt kreisrunde Öffnung 15 handelt, allerdings kann es sich dabei auch um eine rechteckige Öffnung 15 handeln. In jedem Fall ist es denkbar, dass zum Herstellung der Flanschverbindung mehrere Schrauben 5 verwendet über die Erstreckung der Öffnung 15, insbesondere wenn es sich um eine rechteckige Öffnung handelt, die sich aus der Zeichnungsebene der Figuren 1 und 2 heraus erstreckt.

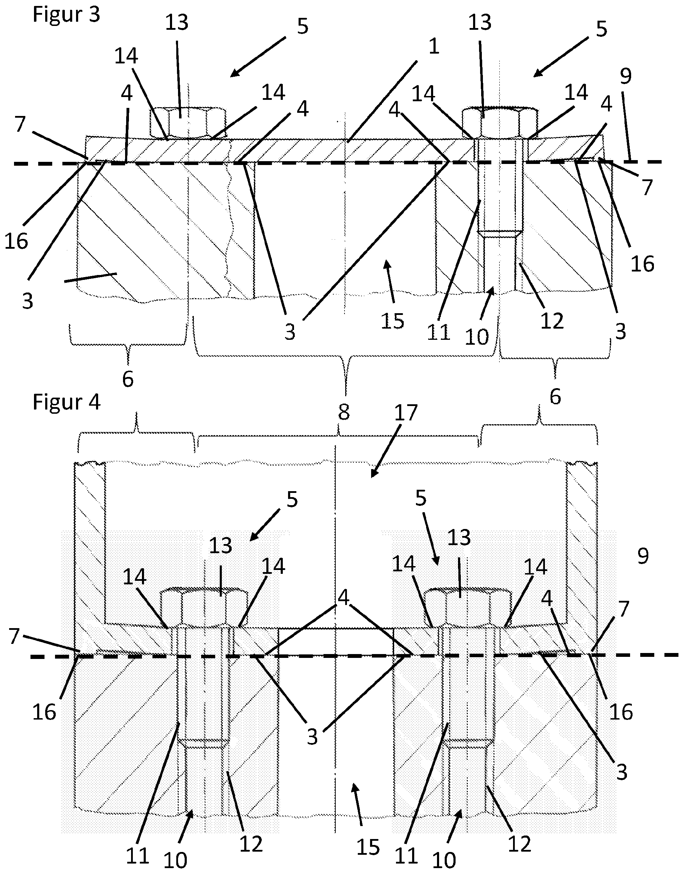

In der Figur 3 ist nunmehr ein weiteres Ausführungsbeispiel einer erfindungsgemäßen Flanschverbindung dargestellt. Dabei wird ein als Rohr ausgebildetes Bauteil 2 mit einem als Deckel für eine Rohröffnung 15 des Bauteils 2 ausgebildeten Bauteils 1 im Querschnitt im Verbindungsfall, d. h. im Fall einer Abdichtung der Öffnung 15, dargestellt.

Wie deutlich zu erkennen ist, weist das Bauteil 1 dabei auf beiden Seiten, d. h. in beiden Randbereichen 6, einen Vorsprung 7 auf, welcher sich in den Randbereichen 6 mit seinen Auflageflächen 16 an der Auflagefläche 4 des Bauteils 2 abstützen. Auch hierbei erfährt das Bauteil 1 in den Randbereichen 6 eine Biegung, während in einem Verbindungsbereich 8 die Anlagenflächen 3 und 4 mit Ausnahme im Bereich der Öffnung 15 des Bauteils 2 vollflächig aneinander aufliegen. Auch hierbei ist zwischen den Auflageflächen 3 und 4 wiederum ein Dichtmedium angeordnet, welches in dieser Darstellung ebenfalls nicht dargestellt ist. Auch hierbei liegt der Verbindungsbereich 8, in dem die Auflageflächen 3 und 4 der Bauteile 1 und 2 vollflächig aneinander aufliegen in der Ebene 9, die der ursprünglichen Ebene der Anlagefläche 4 vor dem Verbinden der beiden Bauteile 1 und 2 entspricht.

Der Vorsprung 7 des Bauteils 1 ist in diesem Ausführungsbeispiel als umlaufender Vorsprung 7 kreisrund ausgebildet um die im Querschnitt kreisrunde Öffnung 15 des Bauteils 2 mit einer gleichmäßigen Flächenpressung im Bereich der Anlagenflächen 3 und 4 der Bauteile 1 und 2 im Verbindungsbereich 8 zu verschließen. Damit dies gewährleistet ist, sind im Zwischenbereich zwischen dem Verbindungsbereich 8 und den Randbereichen 6 kreisrund um die Öffnung 15 Schrauben 5 angeordnet, die mit ihren Außengewinden 11 im ein jeweiliges Innengewinde 12 von Schraubenöffnungen 10 eingreifen und in der Darstellung der Figur 3 bereits maximal angezogen sind, so dass sich die Schraubenköpfe 13 der Schrauben 5 an Anlageflächen 14 des Bauteils 1 abstützen.

In dem Ausführungsbeispiel der Figur 4 werden als Bauteile 1 und 2 zwei Rohre miteinander verbunden. Dabei weist das als Rohr ausgebildete Bauteil 1 eine Innenöffnung 17 auf, die im Querschnitt größer ist als eine Innenöffnung 15 des ebenfalls als Rohr ausgebildeten Bauteils 2. Auch hierbei ist der Vorsprung 7 an dem Bauteil 1 angeordnet und umläuft die Öffnung 15 des Bauteils 2 kreisrund. Das Bauteil 1 weist dabei im Verbindungsbereich 8 eine Öffnung auf, die im Wesentlichen in ihrem Querschnitt der Öffnung 15 des Bauteils 2 entspricht. Hierdurch ist es möglich, dass ein Arbeitsmedium in dem verbundenen Zustand der Bauteile 1 und 2 wie in Figur 4 dargestellt durch diese Öffnung 15 hindurch in die Öffnung 17 des Bauteils 2 treten kann.

Auch in diesem Ausführungsbeispiel liegen im Verbindungsfall die Anlagenflächen 3 und 4 der Bauteile 1 und 2 im Verbindungsbereich 8 vollflächig aneinander an, wobei auch hier zwischen den Anlageflächen 3 und 4 ein Dichtmedium eingebracht ist. In den Randbereichen 6 erfährt das Bauteil 1 hier auch wiederum eine Biegung, so dass das Bauteil 1 nur mit der Auflagefläche 16 des Vorsprungs 7 dort auf der Anlagefläche 4 des Bauteils 2 aufliegt. Auch bei diesem Ausführungsbeispiel ist innerhalb der vollflächigen Auflage der Anlageflächen 3 und 4 eine im Wesentlichen konstante Flächenpressung im Verbindungsbereich 8 gewährleistet, so dass auch hierbei eine sehr gute Dichtigkeit der erfindungsgemäßen Flanschverbindung gewährleistet ist.

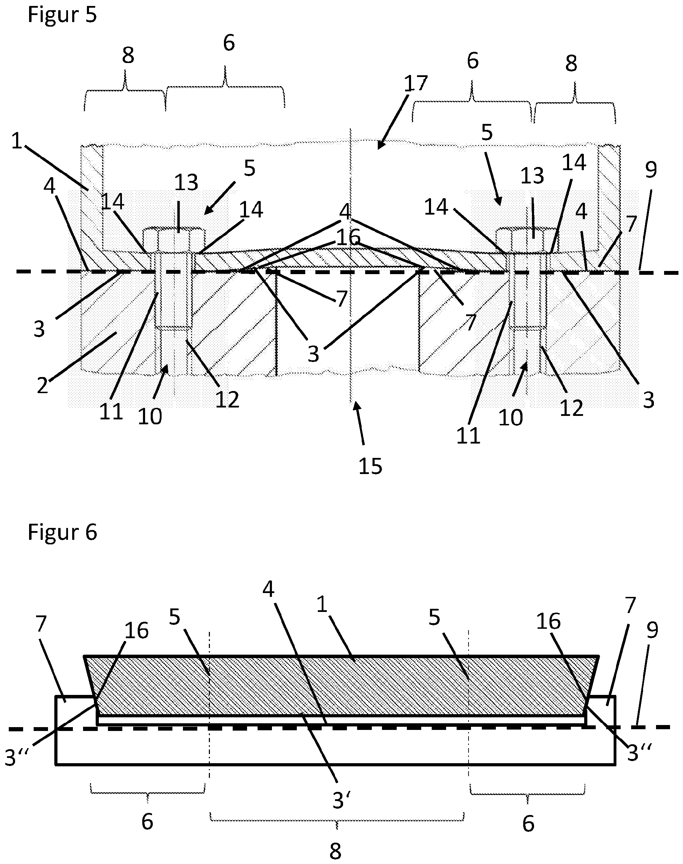

Das Ausführungsbeispiel gemäß der Figur 5 ist ähnlich zu dem der Figur 4. Allerdings werden dabei zwei Bauteile 1 und 2 miteinander verbunden, bei denen der Verbindungsbereich 8 im äußeren Bereich der rohrförmigen Ausgestaltung der Bauteile 1 und 2 und der Randbereich 6 am Innenrand einer Öffnung 15 des Bauteils 2 angeordnet ist. Dabei weist das Bauteil 2 am Rand der Öffnung 15 zu dem Bauteil 1 hinweisend einen kreisrunden, geschlossenen und umlaufenden Vorsprung 7 auf. Die Anlagenflächen 3 und 4 der Bauteile 1 und 2 liegen dabei im Verbindungsbereich 8 ebenfalls vollflächig aneinander, wobei auch hier zwischen den Anlageflächen 3und 4 ein Dichtmedium eingebracht sein kann. Im Randbereich 6 erfährt das Bauteil 1 auch hier wiederum eine Biegung, so dass das Bauteil 2 nur mit der Auflagefläche 16 des Vorsprungs 7 dort auf der Anlagefläche 3 des Bauteils 1 aufliegt. Auch in diesem Ausführungsbeispiel ist innerhalb der vollflächigen Auflage der Anlageflächen 3 und 4 im Verbindungsbereich 8 im Wesentlichen eine konstante Flächenpressung gewährleistet. Daraus resultiert auch in diesem Fall eine sehr gute Dichtigkeit der erfindungsgemäßen Flanschverbindung.

Das Ausführungsbeispiel der Figur 6 beschreibt eine weitere Möglichkeit einer erfindungsgemäßen Flanschverbindung. Hierbei ist die Anlagefläche 3 des Bauteils 1 zweigeteilt. Zum einen in einen Flächenabschnitt 3', der in unverbundenem Zustand der Bauteile 1 und 2 zu der Anlagefläche 4 des Bauteils 2 im Wesentlichen parallel angeordnet ist, sofern Bauteil 1 bereits auf Bauteil 2 aufgesetzt ist. Weiterhin weist die Anlagefläche 3 des Bauteils 1 einen Flächenabschnitt 3" auf, der bereits an einer Anlagefläche 16 eines Vorsprungs 7 des Bauteils 2 anliegt. Wird nunmehr die Flanschverbindung die zwischen dem Bauteil 1 und 2 hergestellt, werden hier nur durch Striche dargestellte Schrauben 5 angezogen, so dass sich in einem Verbindungsbereich die Anlageflächen 4 des Bauteils 2 und 3' des Bauteils 1 vollflächig kontaktieren, während in einem Randbereich 6 diese Bereiche unter Biegung des Bauteils 1 voneinander beabstandet sind, so dass ein direktes aneinander Liegen der Anlageflächen 3' und 4 im Randbereich 6 vermieden ist. Auch bei diesem Ausführungsbeispiel ist gewährleistet, dass in dem Verbindungsbereich 8 die Anlageflächen 3' und 4 in einer Ebene 9 unter einer Flächenpressung aneinander zum Liegen kommen.

In den Ausführungsbeispielen der Figuren 3 bis 6 bei denen der Umlauf des Vorsprungs 7 geschlossen ist, ist es möglich, dass zwischen der Auflagefläche 16 des Vorsprungs 7 des Bauteil 1 und der Auflagefläche 4 des Bauteils 2 ebenfalls ein Dichtmedium angeordnet ist. Hierdurch hat man zusätzlich zu dem Dichtbereich der Anlageflächen 3 und 4 der Bauteile 1 und 2 im Verbindungsbereich 8, einen weiteren Dichtbereich geschaffen, da der Vorsprung 7 des Bauteil 1 dieses geschlossen umläuft. Hierdurch ist eine Redundanz der Dichtigkeit der Flanschverbindung gegeben.

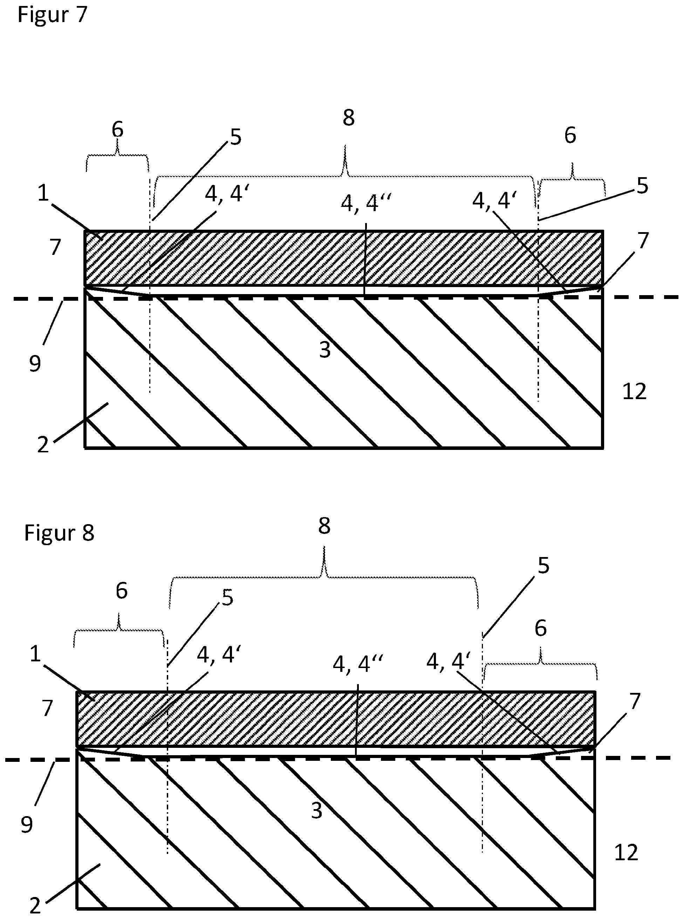

In den Figuren 7 und 8 sind weitere Ausführungsbeispiele einer erfindungsgemäßen Verbindung dargestellt. Hierbei ist die Anlagefläche 4 des Bauteils 2 zweigeteilt. Zum einen in einen Flächenabschnitt 4' der in unverbundenem Zustand der Bauteile 1 und 2 zu der Anlagefläche 3 des Bauteils 1 im Wesentlichen schräg in Richtung des Vorsprungs 7 zuläuft, wenn die beiden Bauteile 1 und 2 zu verbinden bereits aufeinander aufgesetzt sind. Weiterhin weist die Anlagefläche 4 des Bauteils 2 einen Flächenabschnitt 4" auf, der in diesem Zustand, in dem die beiden Bauteile 1 und 2 zwar aufeinander aufliegen, aber noch nicht dichtend miteinander verbunden sind, im Wesentlichen parallel zur Anlagefläche 3 des Bauteils 1 verläuft. Wird nunmehr die Flanschverbindung zwischen den Bauteilen 1 und 2 hergestellt, werden hier nur durch Striche dargestellte Schrauben 5 angezogen, so dass sich in einem Verbindungsbereich 8 der Flächenabschnitte 4" der Anlagefläche 4 des Bauteils 2 und die Anlagefläche 3 im Verbindungsbereich 8 vollflächig kontaktieren. Bei diesem Ausführungsbeispielen ist der Vorsprung 7 derart gestaltet, dass auch in einem Randbereich 6 die Flächenabschnitte 4' der Anlagefläche 4 des Bauteils 2 nach dem Verbinden vollflächig die Anlagefläche 3 des Bauteils 1 im Verbindungsbereich 6 kontaktieren, so dass auch dort ein direktes aneinander Liegen de rAnlagenflächen 3 und 4 im Randbereich 6 gegeben ist. Auch bei diesen Ausführungsbeispielen ist gewährleistet, dass in dem Verbindungsbereich 8 die Anlageflächen 3 und 4 in einer Ebene 9 unter einer Flächenpressung aneinander zum Liegen kommen.

### Bezugszeichenliste

- 1: Bauteil
- 2: Bauteil
- 3: Anlagefläche
- 3': Anlagefläche
- 3": Anlagefläche
- 4: Anlagefläche
- 5: Befestigungselement, Schraube
- 6: Randbereich
- 7: Vorsprung
- 8: Verbindungsbereich
- 9: Ebene
- 10: Öffnung
- 11: Außengewinde
- 12: Innengewinde
- 13: Schraubenkopf
- 14: Anlagefläche
- 15: Öffnung
- 16: Auflagefläche
- 17: Öffnung

## Patentansprüche

1. Flanschverbindung für wenigstens zwei Bauteile (1, 2), welche einander zugewandte Anlagenflächen (3, 4) aufweisen, wobei das eine Bauteil (1) an dem anderen Bauteil (2) mit wenigstens einem Befestigungselement (5) befestigbar ist,
wobei
zwischen den Bauteilen (1, 2) in deren Randbereich (6) wenigstens ein Vorsprung (7) angeordnet ist,
wobei
wenigstens eine der Anlagenflächen (3, 4) gegenüber der andern Anlagefläche (4, 3) konvex gebogen ist und die Anlageflächen (3, 4) in einem Verbindungsbereich (8) unter einer Flächenpressung parallel zueinander angeordnet sind,
wobei der wenigstens eine Vorsprung (7) eine Auflagefläche (16) aufweist, die gegenüber den Anlagenflächen (3, 4) der Bauteile (1, 2) in deren unverbunden Zustand um einen Winkel verschwenkt ist,
**dadurch gekennzeichnet, dass**
im Verbindungsbereich (8) der Anlageflächen (3, 4) der verbundenen Bauteile (1, 2) eine vollflächige Kontaktierung der Anlageflächen (3, 4) realisiert ist.

2. Flanschverbindung nach Anspruch 1, **dadurch gekennzeichnet, dass** durch den wenigstens einen Vorsprung (7) in verbunden Zustand der Bauteile (1, 2) ein direktes aneinander Liegen der Anlagenflächen (3, 4) im Randbereich (6) vermieden ist.

3. Flanschverbindung nach Anspruch 1 oder 2, **dadurch gekennzeichnet, dass** der wenigstens eine Vorsprung (7) an einem der Bauteile (1, 2) angeformt ist.

4. Flanschverbindung nach Anspruch 3, **dadurch gekennzeichnet, dass** der wenigstens eine Vorsprung einstückig mit einem der Bauteile (1, 2) oder durch Stauchung eines der Bauteile (1, 2) hergestellt ist oder aber angegossen, angeschweißt oder dergleichen einstückig angeformt ist.

5. Flanschverbindung nach Anspruch 1 oder 2, **dadurch gekennzeichnet, dass** der wenigstens eine Vorsprung (7) als separates Einlegeteil ausgebildet ist.

6. Flanschverbindung nach Anspruch 5, **dadurch gekennzeichnet, dass** der wenigstens eine Vorsprung (7) als Einstellschraube oder als Einlage aus Metall oder Kunststoff oder aus einer Kombination von beiden ausgebildet ist.

7. Flanschverbindung nach einem der vorhergehenden Ansprüche, **dadurch gekennzeichnet, dass** genau ein Vorsprung (7) vorgesehen ist, der den Randbereich (6) der zu verbindenden Bauteile (1, 2) vollständig umläuft und eine geschlossene Geometrie bildet.

8. Flanschverbindung nach einem der vorhergehenden Ansprüche, **dadurch gekennzeichnet, dass** der wenigstens eine Vorsprung (7) in eine Vertiefung der Anlagenflächen (3, 4) der Bauteile (1, 2) passgenau ohne Spiel eingreift, wobei die Dicke (d) des Vorsprungs (7) größer als die Tiefe der Vertiefung ist.

9. Flanschverbindung nach einem der vorhergehenden Ansprüche, **dadurch gekennzeichnet, dass** wenigsten im Verbindungsbereich (8) zwischen den Bauteilen (1, 2) sowohl teil- oder vollflächig ein Dichtungsmedium angeordnet ist.

10. Flanschverbindung nach einem der vorhergehenden Ansprüche, **dadurch gekennzeichnet, dass** das wenigstens eine Befestigungselement (5) als Schraube ausgebildet ist, die durch eine Öffnung (10) eines Bauteils (1, 2) hindurchführbar und mit ihrem Außengewinde (11) in ein Innengewinde (12) des anderen Bauteils (2, 1) eingreift und deren Schraubenkopf (13) sich im verbundenen Zustand der Bauteile (1, 2) an einer Anlagefläche (14) des einen Bauteils (1, 2) abstützt.

11. Flanschverbindung nach einem der vorhergehenden Ansprüche, **dadurch gekennzeichnet, dass** das wenigstens eine Befestigungselement (5) als hydraulischer oder pneumatischer Stempel, als Zwinge, als Schweißpunkt oder - naht, als Nagel, als Niete oder dergleichen Element für eine direkte oder indirekte Befestigung ausgebildet ist.

12. Flanschverbindung nach einem der vorhergehenden Ansprüche, **dadurch gekennzeichnet, dass** das eine Bauteil (2) als Rohr und das andere Bauteil (1) als Abschlusselement zum Verschließen einer Öffnung (15) des als Rohr ausgebildeten Bauteils (2) ausgebildet ist.

13. Flanschverbindung nach einem der vorhergehenden Ansprüche, **dadurch gekennzeichnet, dass** beide Bauteil (1, 2) als miteinander zu verbindende Rohre ausgebildet sind.

14. Flanschverbindung nach einem der vorhergehenden Ansprüche, **dadurch gekennzeichnet, dass** das eine Bauteil (1) und/oder das andere Bauteil (2) aus einem Metall oder einem Kunststoff bestehen.

## Claims

1. Flanged joint for at least two components (1, 2) which have mutually facing contact surfaces (3, 4),
wherein
the one component (1) is fastenable to the other component (2) with at least one fastening element (5),
wherein
at least one projection (7) is arranged between the components (1, 2) in the edge region (6) thereof,
wherein
at least one of the contact surfaces (3, 4) is curved convexly in relation to the other contact surface (4, 3), and the contact surfaces (3, 4) are arranged parallel to each other in a connecting region (8) under surface pressure,
wherein
the at least one projection (7) has a supporting surface (16) which is pivoted by an angle in relation to the contact surfaces (3, 4) of the components (1, 2) in the unconnected state thereof
**characterized in that**
extensive contacting of the contact surfaces (3, 4) is realized in the connecting region (8) of the contact surfaces (3, 4) of the connected components (1, 2).

2. Flanged joint according to Claim 1, **characterized in that**, by means of the at least one projection (7), direct lying of the contact surfaces (3, 4) against each other in the edge region (6) is avoided in the connected state of the components (1, 2).

3. Flanged joint according to Claim 1 or 2, **characterized in that** the at least one projection (7) is integrally formed on one of the components (1, 2).

4. Flanged joint according to Claim 3, **characterized in that** the at least one projection is produced integrally with one of the components (1, 2) or by compression of one of the components (1, 2), or else is cast on, welded on or similarly integrally formed thereon.

5. Flanged joint according to Claim 1 or 2, **characterized in that** the at least one projection (7) is designed as a separate insert part.

6. Flanged joint according to Claim 5, **characterized in that** the at least one projection (7) is designed as an adjustment screw or as an insert of metal or plastic or of a combination of both.

7. Flanged joint according to one of the preceding claims, **characterized in that** precisely one projection (7) is provided which completely encircles the edge region (6) of the components (1, 2) to be connected and forms a closed geometry.

8. Flanged joint according to one of the preceding claims, **characterized in that** the at least one projection (7) engages in a depression of the contact surfaces (3, 4) of the components (1, 2) in a precisely fitting manner without play, wherein the thickness (d) of the projection (7) is greater than the depth of the depression.

9. Flanged joint according to one of the preceding claims, **characterized in that** a sealing medium is arranged either over a partial area or full area at least in the connecting region (8) between the components (1, 2).

10. Flanged joint according to one of the preceding claims, **characterized in that** the at least one fastening element (5) is designed as a screw which can be guided through an opening (10) in a component (1, 2) and engages with its external thread (11) in an internal thread (12) of the other component (2, 1) and the screw head (13) of which is supported on a contact surface (14) of the one component (1, 2) in the connected state of the components (1, 2).

11. Flanged joint according to one of the preceding claims, **characterized in that** the at least one fastening element (5) is designed as a hydraulic or pneumatic punch, as a clamp, as a welding point or welding seam, as a nail, as a rivet or similar element for direct or indirect fastening.

12. Flanged joint according to one of the preceding claims, **characterized in that** the one component (2) is designed as a tube and the other component (1) as a closing element for closing an opening (15) in the component (2) designed as a tube.

13. Flanged joint according to one of the preceding claims, **characterized in that** the two components (1, 2) are designed as tubes which can be connected to each other.

14. Flanged joint according to one of the preceding claims, **characterized in that** the one component (1) and/or the other component (2) are composed of a metal or a plastic.

## Revendications

1. Raccord à bride pour au moins deux composants (1, 2), qui présente des surfaces de butée (3, 4) tournées l'une vers l'autre, l'un des composants (1) pouvant être fixé à l'autre composant (2) avec au moins un élément de fixation (5),
au moins une saillie (7) étant disposée entre les composants (1, 2) dans la région de bord (6),
au moins l'une des surfaces de butée (3, 4) ayant une courbure convexe par rapport à l'autre surface de butée (4, 3) et les surfaces de butée (3, 4) étant disposées parallèlement les unes aux autres dans une région d'assemblage (8) sous l'effet d'une pression superficielle,
l'au moins une saillie (7) présentant une surface d'appui (16) qui, dans son état non assemblé, est pivotée d'un certain angle par rapport aux surfaces de butée (3, 4) des composants (1, 2),
**caractérisé en ce que**
dans la région d'assemblage (8) des surfaces de butée (3, 4) des composants assemblés (1, 2) est réalisé un contact sur toute la surface des surfaces de butée (3, 4).

2. Raccord à bride selon la revendication 1, **caractérisé en ce que** dans l'état assemblé des composants (1, 2), une application directe l'une contre l'autre des surfaces de butée (3, 4) dans la région de bord (6) est empêchée par l'au moins une saillie (7).

3. Raccord à bride selon la revendication 1 ou 2, **caractérisé en ce que** l'au moins une saillie (7) est façonnée sur l'un des composants (1, 2).

4. Raccord à bride selon la revendication 3, **caractérisé en ce que** l'au moins une saillie est fabriquée d'une seule pièce avec l'un des composants (1, 2) ou par écrasement de l'un des composants (1, 2) ou est coulée, soudée ou façonnée d'une seule pièce de manière similaire sur celui-ci.

5. Raccord à bride selon la revendication 1 ou 2, **caractérisé en ce que** l'au moins une saillie (7) est réalisée sous forme de pièce d'insertion séparée.

6. Raccord à bride selon la revendication 5, **caractérisé en ce que** l'au moins une saillie (7) est réalisée sous forme de vis d'ajustage ou sous forme d'insert en métal ou en plastique ou en une combinaison des deux.

7. Raccord à bride selon l'une quelconque des revendications précédentes, **caractérisé en ce qu'**il est prévu exactement une saillie (7) qui entoure complètement la région de bord (6) des composants à assembler (1, 2) et qui forme une géométrie fermée.

8. Bride selon l'une quelconque des revendications précédentes, **caractérisé en ce que** l'au moins une saillie (7) vient en prise avec ajustement serré sans jeu dans un renfoncement des surfaces de butée (3, 4) des composants (1, 2), l'épaisseur (d) de la saillie (7) étant supérieure à la profondeur du renfoncement.

9. Raccord à bride selon l'une quelconque des revendications précédentes, **caractérisé en ce qu'**au moins dans la région d'assemblage (8) entre les composants (1, 2) et sur une partie de la surface ou sur toute la surface est disposé un milieu d'étanchéité.

10. Raccord à bride selon l'une quelconque des revendications précédentes, **caractérisé en ce que** l'au moins un élément de fixation (5) est réalisé sous forme de vis qui peut être guidée à travers une ouverture (10) d'un composant (1, 2) et qui s'engage avec son filetage extérieur (11) dans un filetage intérieur (12) de l'autre composant (2, 1) et dont la tête de vis (13) s'appuie dans l'état assemblé des composants (1, 2) contre une surface de butée (14) de l'un des composants (1, 2).

11. Raccord à bride selon l'une quelconque des revendications précédentes, **caractérisé en ce que** l'au moins un élément de fixation (5) est réalisé sous forme de poinçon hydraulique ou pneumatique, sous forme de virole, de point ou de cordon de soudage, de clou, de rivet ou d'élément similaire pour une fixation directe ou indirecte.

12. Raccord à bride selon l'une quelconque des revendications précédentes, **caractérisé en ce que** l'un des composants (2) est réalisé sous forme de tube et l'autre composant (1) est réalisé sous forme d'élément de terminaison pour fermer une ouverture (15) du composant (2) réalisé sous forme de tube.

13. Raccord à bride selon l'une quelconque des revendications précédentes, **caractérisé en ce que** les deux composants (1, 2) sont réalisés sous forme de tubes à assembler l'un à l'autre.

14. Raccord à bride selon l'une quelconque des revendications précédentes, **caractérisé en ce que** l'un des composants (1) et/ou l'autre composant (2) se composent d'un métal ou d'un plastique.
